# EUROPÄISCHE PATENTANMELDUNG

(11) **EP 2 320 492 A1**
(43) Veröffentlichungstag der Anmeldung: **11.05.2011**
(21) Anmeldenummer: 10189380.8
(22) Anmeldetag: 29.10.2010
(51) Int. Cl.: H01M 2/10

(54) **Haltevorrichtung für Einzelzellen in einem Zellenpack**

(30) Priorität: 06.11.2009 DE 102009052249
(71) Anmelder: A1. Light and More Lichttechnik GmbH, 73249 Wernau (DE)
(72) Erfinder: Meyer-Bockhorn, Nicolas, 73270, Kirchheim/Teck (DE)
(74) Vertreter: Jeck, Anton

(57) **Zusammenfassung**

Die Erfindung betrifft eine Haltevorrichtung für Einzelzellen (20) in einem Zellenpack, bei dem die Einzelzellen berührungslos im Zellenpack, nach Anzahl und Anordnung der Einzelzellen vorgegeben, über ein Abstandsmaterial miteinander verbunden sind. Dabei ist vorgesehen, dass die Einzelzellen in einem oder mehreren Abstandshaltern (10) eingesetzt sind, wobei die Abstandshalter mit einer Stärke (d) sich nur über einen Teil der Höhe der Einzelzellen erstrecken. Die Abstandshalter sind mit Aufnahmen (11) versehen, die einen Durchmesser aufweisen, der geringfügig größer ist als der Außendurchmesser der Einzelzellen. Dabei sind die Abstandshalter mit einem Klebstoff, Schaumstoff oder einer Komponente (12) versehen, der bzw. die zu einer Volumen vergrößernden und/oder aushärtenden Reaktion bringbar ist. Der sich dabei ausdehnende Klebstoff, Schaumstoff oder die Komponente oder dgl. schließt die Lücken zwischen den Aufnahmen in den Abstandshaltern und den Einzelzellen und fixiert die Einzelzellen in den Abstandshaltern. Dadurch wird eine gegen Vibration gesicherte Festlegung der Einzelzellen in den Abstandshaltern geschaffen, die fertigungstechnisch einfacher herzustellen und daher eindeutig zu beherrschen ist.

## Beschreibung

Die Erfindung betrifft eine Haltevorrichtung für Einzelzellen in einem Zellenpack, bei dem die Einzelzellen berührungslos im Zellenpack, nach Anzahl und Anordnung der Einzelzellen vorgegeben, über ein Abstandsmaterial miteinander verbunden sind.

Bei einem Zellenpack, der aus mehreren Einzelzellen besteht, besteht die Vorschrift, dass bei Vibrationen die Einzelzellen keine erheblichen mechanischen Einwirkungen erfahren dürfen.

Es ist ein Zellenpack bekannt, bei dem die Einzelzellen berührungslos aneinander gereiht und über ein Abstandsmaterial miteinander verbunden sind. Das Abstandsmaterial ist dabei als Spritzgussteil ausgeführt. Diese bekannte Haltevorrichtung ist fertigungstechnisch kompliziert und aufwändig.

Es ist ein Zellenpack bekannt, bei dem die Einzelzellen berührungslos aneinander gereiht und über ein Abstandsmaterial miteinander verbunden sind. Das Abstandsmaterial ist dabei als Vergussmasse zwischen die beabstandeten Einzelzellen ausgeführt und verbindet die Einzelzellen nach dem Erstarren. Daher entstehen thermische Probleme bei der Anwendung, da die Einzelzellen formschlüssig in dem Abstandsmaterial eingeschlossen sind und keine Wärmeableitung aus dem Innern zulassen.

Es ist Aufgabe der Erfindung, eine Haltevorrichtung für Einzelzellen in einem Zellenpack mit gegen Vibration gesicherter Festlegung der Einzelzellen zu schaffen, die fertigungstechnisch wesentlich einfacher herzustellen ist und einen Wärmeaustausch der Einzelzellen ermöglicht.

Die DE 600 35 228 T2 zeigt einen Batteriepack, bei dem die Zellen in einem Ober-und Unterkontakt abgestützt sind und dabei durch angeformte Kragen seitlich unverschiebbar gehalten sind. Die seitliche Festlegung der Zellen ist damit auf den Ober-und Unterkontakt verlagert, was komplizierte Teile bedingt, die vorzugsweise im Kunststoff-Spritzguss-Verfahren hergestellt sind.

Zur Festlegung und Kühlung der Zellen, verwendet eine Vorrichtung einen Bodenkörper mit Becherteilen, in die die Zellen einsetzbar sind. Die Bodenkörper weisen eine Öffnung auf, durch die Luft in den Innenraum der Becherteile einteilbar ist. Die Luft ist in spiralförmigen Nuten um die Zelle geführt und kühlt diese ab. Der Aufbau einer Baueinheit aus mehreren Zellen erfordert einen Aufwand von komplizierten Teilen, die nur mit erheblichem Herstellungsaufwand zu einer Batterieeinheit zusammenbaubar sind.

Schließlich zeigt die DE 10 2007 050 518 A1 eine Speicherzelle mit mehreren Einzelzellen, die mit einem umgebenden Kühlkörper im thermischen Kontakt stehen. Dabei werden die Zellen mit den umgebenden Kühlkörper von Haltegliedern aufgenommen. Die Kühlkörper umspannen die Speicherzelle mit den Zellen und weisen integrierte Kühlkanäle auf, durch die ein Kühlmittel zugeführt wird. Auch diese Speicherzelle ist kompliziert im Aufbau und erfordert aufwendige Bauteile.

Die gestellte Aufgabe wird nach der Erfindung durch die Merkmale des Anspruchs 1 gelöst.

Aus dem Abstandsmaterial werden die Abstandselemente mit Aufnahmen in der Anzahl und Anordnung der Einzelzellen in dem Zellenpack vorgefertigt. Die Stärke der Abstandshalter erstreckt sich nur über einen Teil der Höhe der Einzelzellen, und die Aufnahmen in den Abstandshaltern haben einen Durchmesser, der geringfügig größer ist als der Außendurchmesser der Einzelzellen. Die Abstandshalter sind mit einem Klebstoff, einem Schaumstoff, einer Komponente oder dgl. versehen, der bzw. die zu einer Volumen vergrößernden und/oder aushärtenden Reaktion bringbar sind. Der dabei aushärtende Klebstoff, Schaumstoff oder die Komponente oder dgl. schließt die Lücken zwischen den Aufnahmen in den Abstandshaltern und den Einzelzellen und fixiert damit die Einzelzellen in den Abstandshaltern. Die Einzelzellen sind im Zellenpack damit berührungslos fixiert und erlauben einen Wärmeaustausch von lnnen.

Weitere vorteilhafte Ausgestaltungen der Haltevorrichtung sind den Merkmalen der Unteransprüche entnehmbar.

Die Stärke der Abstandshalter liegt zwischen 0,5 mm und 10 mm.

Der mehrlagige Abstandshalter besteht insbesondere aus zwei Lagen. Die beiden Lagen sind durch den Klebstoff, den Schaumstoff oder die Komponente oder dgl. miteinander verbunden.

Die Volumen vergrößernde und/oder aushärtende Reaktion des Klebstoffs, des Schaumstoffs oder der Komponente oder dgl. wird durch Belichtung, Feuchtigkeit, Gas, Wärmestrahlung, Mikrowelle, Druck, Zeitablauf oder dgl. ausgelöst.

Die Abstandshalter sind aus Epoxid, Hartpapier, Schaumstoff oder dgl. vorgefertigt.

Der Abstandshalter weist zudem Verbindungsleitungen auf, die die Spannung der Einzelzellen und/oder den Wert eines NTC nach außen führen. Die Verbindungsleitungen sind über Anschlussleitungen mit den Einzelzellen verbunden.

Die Erfindung wird anhand von in den Zeichnungen dargestellten Ausführungsbeispielen näher erläutert. Es zeigen:
- Fig. 1: die Draufsicht und Seitenansicht auf einen einlagigen Abstandshalter für 16 Einzelzellen eines Zellenpacks,
- Fig. 2: die Draufsicht und Seitenansicht auf einen zweilagigen Abstandshal- ter für 28 Einzelzellen in einem Zellenpack,
- Fig. 3: in vergrößerter Darstellung die aus dem Abstandshalter nach Fig. 2 ausgestanzte Einzelheit A und
- Fig. 4: in perspektivischer Ansicht den Abstandshalter nach Fig. 2 mit einge- setzten Einzelzellen.

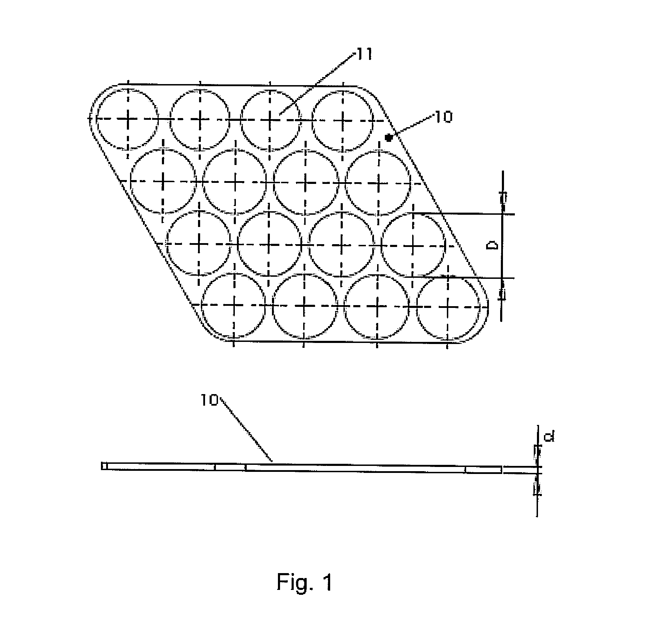

Der in Fig. 1 gezeigte Abstandshalter 10 ist einlagig und hat, wie die Seitenansicht offenbart, nur eine geringe Stärke d von etwa 1,5 mm. Die Aufnahmen 11 in dem Abstandshalter 10 sind in den Spalten um eine halbe Teilung versetzt, um die Fläche des Abstandshalters 10 mit den Aufnahmen 11 für die Einzelzellen optimal ausnützen zu können. Der Durchmesser D der Aufnahmen 11 ist geringfügig größer als der Außendurchmesser der einzusetzenden Einzelzellen. Dies erleichtert das Einsetzen der Einzelzellen in den vorgefertigten Abstandshalter 10.

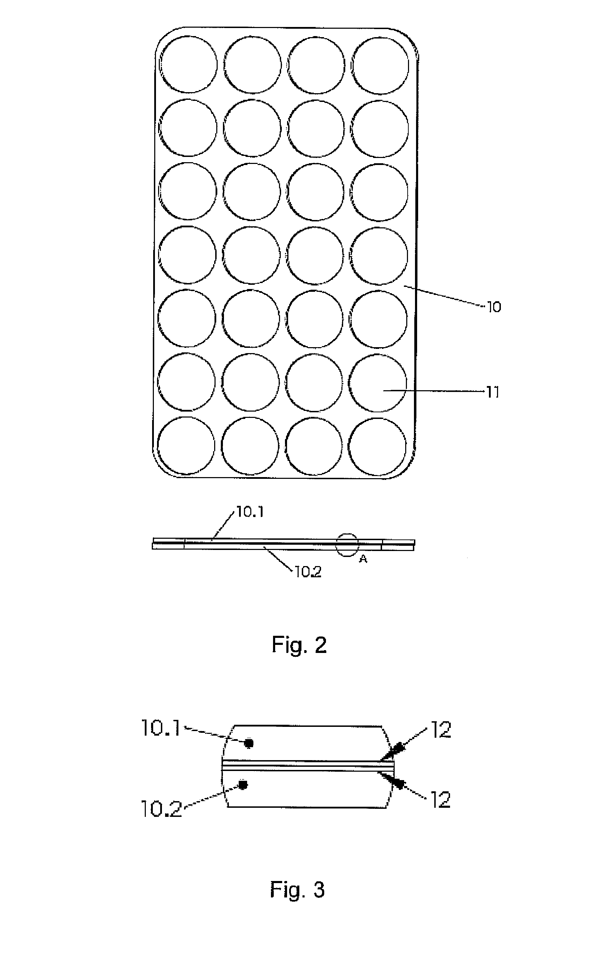

Wie die Fig. 2 an einem zweilagigen Abstandshalter 10 zeigt, können die Aufnahmen 11 für die Einzelzellen auch in vertikalen Spalten und horizontalen Zeilen angeordnet werden. Das erfordert etwas größeren Platzbedarf für den Abstandshalter 10 bei vorgegebener Anzahl von Einzelzellen. Wie die Seitenansicht nach Fig. 2 und die in Fig. 3 gezeigte vergrößerte Einzelheit A aus dem zweilagigen Abstandshalter 10 nach Fig. 2 wiedergibt, bilden die Lagen 10.1 und 10.2 zusammen die Stärke des Abstandshalters 10. Die beiden Lagen 10.1 und 10.2 sind durch Klebstoff, Schaumstoff oder eine Komponente 12 miteinander verbunden. Auch der einlagige Abstandshalter 10 nach Fig. 1 ist mit Klebstoff, Schaumstoff oder einer derartigen Komponente 12 versehen.

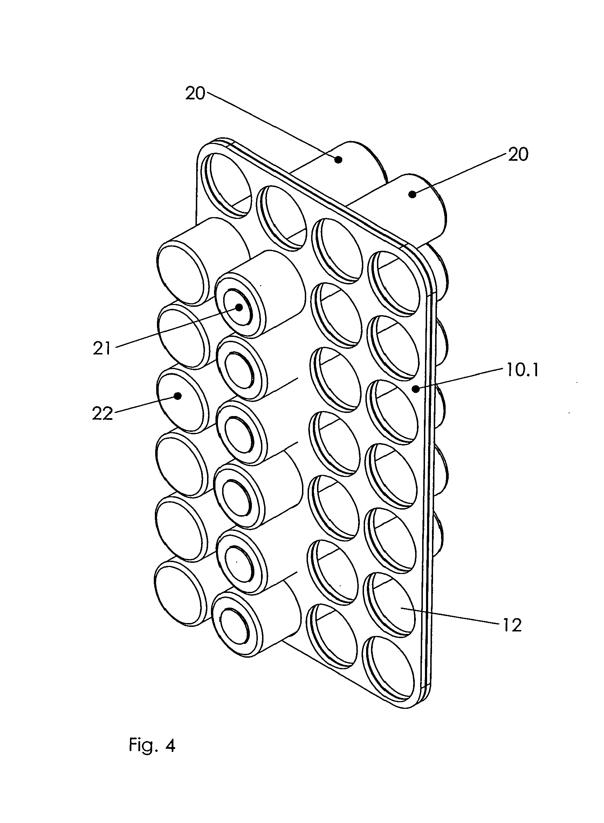

Sind die Einzelzellen in den Abstandshalter 10 nach Fig. 1 oder Fig. 2 eingesetzt, wird durch Belichtung, Feuchtigkeit, Gas, Wärmestrahlung, Mikrowelle, Druck, Zeitablauf oder dgl. eine Volumen vergrößernde und/oder aushärtende Reaktion des Klebstoffs, des Schaumstoffs, der Komponente 12 oder dgl. ausgelöst. Dadurch werden die Lücken zwischen den Einzelzellen 20 und den Aufnahmen 11 für die Einzelzellen 20 geschlossen und die Einzelzellen 20 in den Abstandshaltern 10 fest fixiert, wie aus Fig. 4 zu sehen ist.

Auf diese Weise lassen sich die Einzelzellen 20 auch in zwei und mehr Abstandshalter 10 nach Fig. 1 oder Fig. 2 einbringen und fest fixieren.

## Patentansprüche

1. Haltevorrichtung für Einzelzellen in einem Zellenpack, bei dem die Einzelzellen berührungslos im Zellenpack nach Anzahl und Anordnung der Einzelzellen vorgegeben über ein Abstandsmaterial miteinander verbunden sind,
**dadurch gekennzeichnet,**
**dass** die Einzelzellen (20) in einen oder mehreren Abstandshaltern (10) eingesetzt sind, wobei die Abstandshalter (10) mit einer Stärke (d) sich nur über einen Teil der Höhe der Einzelzellen (20) erstrecken und mit Aufnahmen (11) versehen sind, die einen Durchmesser (D) aufweisen, der geringfügig größer ist als der Außendurchmesser der Einzelzellen (20),
**dass** die Abstandshalter (10) mit einem Klebstoff, Schaumstoff oder einer Komponente (12) versehen sind, der bzw. die zu einer Volumen vergrößernden und/oder aushärtenden Reaktion bringbar ist und
**dass** der sich ausdehnende Klebstoff, Schaumstoff oder die Komponente (12) oder dgl. die Lücken zwischen den Aufnahmen (11) in den Abstandshaltern (10) und den Einzelzellen (20) schließt und die Einzelzellen (20) in den Abstandshaltern (10) fest fixiert.

2. Haltevorrichtung nach Anspruch 1,
**dadurch gekennzeichnet,**
**dass** die Stärke (d) der Abstandshalter (10) zwischen 0,5 mm und 10 mm liegt.

3. Haltevorrichtung nach Anspruch 1,
**dadurch gekennzeichnet,**
**dass** der Abstandshalter (10) aus zwei Lagen (10.1, 10.2) zusammengesetzt ist und
**dass** in dem vorgefertigten Abstandshalter (10) die beiden Lagen (10.1, 10.2) mittels Klebstoff, Schaumstoff oder einer Komponente (12) verbunden sind.

4. Haltevorrichtung nach Anspruch 1 bis 3,
**dadurch gekennzeichnet,**
**dass** die Volumen vergrößernde und/oder aushärtende Reaktion des Klebstoffs, des Schaumstoffs oder der Komponente (12) oder dgl. durch Belichtung, Feuchtigkeit, Gas, Wärmestrahlung, Mikrowelle, Druck, Zeitablauf oder dgl. auslösbar ist.

5. Haltevorrichtung nach einem der Ansprüche 1 bis 4,
**dadurch gekennzeichnet,**
**dass** die Abstandshalter (10) aus Epoxid, Hartpapier, Schaumstoff oder dgl. vorgefertigt sind.

6. Haltevorrichtung nach einem der Ansprüche 1 bis 5,
**dadurch gekennzeichnet,**
**dass** der Abstandhalter Verbindungsleitungen aufweist, die die Spannungen der der Einzelzellen (20) leiten. (Einzelzellenspannungsabfrage)

7. Haltevorrichtung nach einem der Ansprüche 1 bis 5,
**dadurch gekennzeichnet,**
**dass** der Abstandhalter Verbindungsleitungen aufweist, die die Werte der NTC leiten. (NTC dienen der Überwachung der Temperatur)
